# EUROPÄISCHE PATENTSCHRIFT

(11) **EP 1 245 430 B1**
(45) Veröffentlichungstag und Bekanntmachung des Hinweises auf die Patenterteilung: **29.11.2006**
(21) Anmeldenummer: 02003951.7
(22) Anmeldetag: 22.02.2002
(51) Int. Cl.: B60K 37/00

(54) **Verfahren und Vorrichtung zur Erzeugung einer Anzeige-Bedienumgebung einer Mensch-Maschine-Schnittstelle**
Method and device for creating a display and control panel for a man machine interface
Méthode et dispositif pour créer un panneau d'affichage et de commande pour une interface homme-machine

(30) Priorität: 21.03.2001 US 814233
(43) Veröffentlichungstag der Anmeldung: 02.10.2002
(73) Patentinhaber: Volkswagen AG, 38436 Wolfsburg (DE)
(72) Erfinder: Oberschachtsiek, André, 38518 Gifhorn (DE); Bergmann, Carsten, Campbell, CA 95008 (US)

(56) Entgegenhaltungen:
- EP-A- 1 048 507
- WO-A-97/34388
- WO-A-98/51991
- DE-A- 19 627 923
- DE-A- 19 807 410
- US-A- 6 091 411

## Beschreibung

Die Erfindung betrifft ein Verfahren zur Erzeugung einer Anzeige- und Bedienumgebung einer Mensch-Maschine-Schnittstelle mit angeschlossenen Einrichtungen und/oder Anwendungen, wobei der Mensch-Maschine-Schnittstelle direkt oder indirekt eine Verarbeitungseinrichtung zugeordnet ist, eine Vorrichtung zur Erzeugung einer Anzeige- und Bedienumgebung einer Mensch-Maschine-Schnittstelle entsprechend angeschlossener Einrichtungen und/oder Anwendungen, wobei die Mensch-Maschine-Schnittstelle zumindest eine Eingabeeinrichtung und zumindest eine Ausgabeeinrichtung aufweist und eine Verarbeitungseinrichtung umfasst und/oder mit einer Verarbeitungseinrichtung verbunden ist sowie ein Computerprogrammprodukt.

Vorrichtungen und Verfahren für Mensch-Maschine-Schnittstellen werden allgemein in zahlreichen Einrichtungen und Anwendungen, einschließlich automobiler Anwendungen eingesetzt. Diese Vorrichtungen und Verfahren basieren bis lang auf einer fest programmierten Anzeige, die direkt und untrennbar mit den Anwendungsprogrammen verbunden ist. Eine solche Mensch-Maschine-Schnittstelle für den Einsatz in einem Kraftfahrzeug ist zum Beispiel aus dem europäischen Patent EP 701 926 B1 bekannt.

Aus der WO 01/00452 ist weiterhin ein Fahrzeugkommunikationssystem mit Anzeige- und Bedieneinrichtung bekannt, bei dem für die Anzeige- und Bedieneinrichtung eine auf dem HTML/XML-Seitenformat basierende grafische Benutzeroberfläche realisiert ist, für die als Grundelemente standardisierte HTML-;XML- und ActiveX-Module verwendet werden. Die implementierte grafische Benutzeroberfläche besteht aus einem MMI-Anwendungsmodul in Form eines HTTP-Servers, der über ein zugehöriges Filesystem HTML- oder XML-Seiten generiert und im Steuerrechner oder in der Anzeige- und Bedieneinheit oder verteilt in beiden Komponenten implementiert sein kann, sowie aus einem zugehörigen Browser oder Interpreter in der Anzeige- und Bedieneinheit zur Darstellung dieser generierten Seiten. Das System kommt ohne ein standardisiertes Betriebssystem aus.

Die gattungsgemäße US 6 091 411 offenbart eine dynamische Aktualisierung von Leitmotiven (themes) für Bedienoberflächen. Diese Leitmotive bestehen aus Hintergrundbildern, Mauszeigern, Piktogrammen und Klängen und sind bestimmten Themen zugeordnet. Sie geben der Benutzerumgebung zumindest teilweise eine andere visuelle oder akustische Gestalt zu, ohne dass in irgendeiner Art die Benutzungsmöglichkeit verändert wird. Sie haben daher keinen grundsätzlichen Einfluss auf eine Anzeige- und Bedieneinheit einer Mensch-Maschine-Schnittstelle. Die zu diesen Leitmotiven gehörenden Daten können lokal in einer Speichereinheit des Computers bzw. Clients gespeichert werden, auf dem die Bedienoberfläche angezeigt wird, oder auch auf einem Server, der über eine Netzverbindung, wie beispielsweise das Internet, erreichbar ist.

Die Aufgabe der Erfindung besteht darin, ein Verfahren und eine Vorrichtung zur Erzeugung einer Anzeige- und Bedienumgebung einer weitgehend universell einsetzbaren dynamischen Mensch-Maschine-Schnittstelle zu schaffen.

Die Aufgabe wird durch die Merkmale der Patentansprüche 1, 13 oder 26 gelöst. Vorteilhafte Aus- und Weiterbildungen sind in den Unteransprüchen beschrieben.

Nach einer vorteilhaften Ausbildung der Erfindung weisen die generischen Daten der Darstellungs- und/oder Bedienumgebung der Mensch-Maschine-Schnittstelle umgebungsspezifische und/oder gerätespezifische und/oder kundenspezifische Daten sowie getrennt davon funktions- und/oder funktionsgruppenabhängige Daten von anschließbaren Einrichtungen auf. Die umgebungsspezifischen und/oder gerätespezifischen und/oder kundenspezifischen Daten können zum Beispiel Daten des vorgesehenen Einsatzortes, zum Beispiel, können sich die Daten in Abhängigkeit davon unterscheiden, ob die Mensch-Maschine-Schnittstelle im Fahrzeug, im geschäftlichen oder privaten Bereich eingesetzt wird. Solche Daten sind zum Beispiel Design- und Farbdaten der Anzeigen oder deren Teile. Die funktions- und/oder funktionsgruppenabhängige Daten sind beispielsweise Daten des strukturellen Aufbaus von Anzeigebildern und/oder deren Teilen, Daten der Menüstruktur bzw. der Verknüpfung der Anzeigen.

Die umgebungsspezifischen und/oder gerätespezifischen und/oder kundenspezifischen Daten werden gemäß der Erfindung mit den abgerufenen Daten der funktions- und/oder funktionsgruppenabhängigen Daten in Abhängigkeit vordefinierter Parameter, die zumindest bestimmen welche der gespeicherten Daten der einen und/oder anderen Gruppe abgerufen oder übertragen werden, zusammengeführt.

Eine zusätzliche Weiterbildung des erfindungsgemäßen Verfahrens sieht vor, dass in einem ersten Schritt funktions- und/oder funktionsgruppenabhängigen Daten abgerufen und/oder automatisch übertragen werden. Danach werden in einem weiteren Schritt umgebungsspezifische und/oder gerätespezifische und/oder kundenspezifische Daten gemäß der abgerufenen und/oder übertragenen funktions- und/oder funktionsgruppenabhängigen Daten und/oder in Abhängigkeit vordefinierter Parameter automatisch abgerufen und/oder übertragen. Außerdem werden die Daten der angeschlossenen Einrichtungen und/oder Anwendungen automatisch abgerufen und/oder übertragen. Schließlich werden die abgerufenen und/oder übertragenen Daten miteinander verknüpft und mit Hilfe der abgerufenen und/oder übertragenen Daten Anzeigen und/oder Bedienstrukturen auf der Mensch-Maschine-Schnittstelle erzeugt.

Bei dem Einsatz der Mensch-Maschine-Schnittstelle in einem Kraftfahrzeug weisen nach einer vorteilhaften Ausbildung der Erfindung die umgebungsspezifischen und/oder gerätespezifischen und/oder kundenspezifischen Daten fahrzeugspezifische Daten, insbesondere des Herstellers und/oder des Fahrzeugtyps und/oder Daten der Ausstattung, auf. Des weiteren kann vorgesehen sein, dass die funktions- und/oder funktionsgruppenabhängigen Daten Daten eines Aussehens und/oder mindestens einer Funktion mindestens einer programmgesteuerten Darstellung, insbesondere eines Applets, für jedes von mehreren Fahrzeugen aufweisen.

Vorzugsweise enthalten die Daten der angeschlossenen Einrichtungen und/oder Anwendungen Daten von Funktionen der angeschlossenen Einrichtungen und/oder Anwendungen, wobei vorzugsweise mindestens eine Funktion einer programmgesteuerten Darstellung entspricht.

Nach einer Weiterbildung der Erfindung für den Einsatz in einem Kraftfahrzeug sind folgende Verfahrensschritte vorgesehen:
- Abrufen und/oder automatisches Übertragen der Daten, die das Aussehen und/oder die Funktion von mindestens einer programmgesteuerten Darstellung, insbesondere eines Applets, darstellen,
- Abrufen und/oder automatisches Übertragen zumindest der fahrzeugspezifischen Parameter der umgebungsspezifischen Daten entsprechend der abgerufenen Daten der mindestens einen programmgesteuerten Darstellung und/oder Abrufen und/oder Übertragen der fahrzeugspezifischen Parameter in Abhängigkeit von bestimmten Vorgaben oder Parametern,
- Abrufen und/oder automatisches Übertragen der Funktionsdaten der angeschlossenen Einrichtungen und/oder Anwendungen entsprechend der abgerufenen Daten der mindestens einen programmgesteuerten Darstellung und
- Generieren von Anzeigen und/oder Bedienstrukturen auf der Mensch-Maschine-Schnittstelle mit mindestens einer programmgesteuerten Darstellung entsprechend der abgerufenen und/oder übertragenen und miteinander verknüpften Daten.

Außerdem kann vorgesehen sein, dass zumindest ein Teil der Daten, insbesondere Funktionsdaten der anzuzeigenden und/oder zu bedienenden Einrichtungen und/oder Anwendungen, in einer zentralen Einrichtung eines Datenkommunikationsnetzwerkes, beispielsweise des Internets oder Intranets, abgespeichert sind und über eine aufbaubare Kommunikationsverbindung von der Verarbeitungseinrichtung abgerufen und/oder automatisch übertragen werden.

Eine weitere Ausbildung sieht vor, dass zumindest ein Teil der generischen Daten der Darstellungs- und/oder Bedienumgebung der Mensch-Maschine-Schnittstelle und/oder zusätzliche Daten der Darstellungs- und/oder Bedienumgebung in einer zentralen Einrichtung eines Datenkommunikationsnetzwerkes abgespeichert sind und über eine aufbaubare Kommunikationsverbindung von der Verarbeitungseinrichtung abgerufen und/oder automatisch übertragen werden.

Die abgespeicherten Daten der Darstellungs- und/oder Bedienumgebung und/oder die abgespeicherten Daten der anzuzeigenden und/oder zu bedienenden Einrichtungen und/oder Anwendungen werden nach einer vorteilhaften Aus- und Weiterbildung der Erfindung in definierten Zeitabständen und/oder ereignisabhängig aktualisiert und in definierten Zeitabständen und/oder ereignisabhängig abgerufen und/oder automatisch übertragen. Solche Ereignisse können bei einer Fahrzeuganwendung beispielsweise "Zündung ein/aus", "neue Einrichtung und/oder Anwendung" wird mit der Mensch-Maschine-Schnittstelle verbunden, "manuelle Anforderung von gespeicherten Daten", "es sind neue Daten vorhanden" und/oder "Fahrzeug befindet sich beim Service" sein. Die Aufzählung stellt jedoch keine Einschränkung des Schutzumfangs dar. Es sind auch andere Ereignisse denkbar.

Bei der erfindungsgemäßen Vorrichtung sind der Verarbeitungseinrichtung eine oder mehrere Speichereinrichtungen zugeordnet, in der bzw. in denen generische Daten der Darstellungs- und/oder Bedienungsumgebung der Mensch-Maschine-Schnittstelle und Daten, insbesondere Funktionsdaten der angeschlossenen Einrichtungen und/oder Anwendungen abgelegt sind. Die Verarbeitungseinrichtung ist erfindungsgemäß derart ausgebildet, dass abgespeicherte generische Daten der Darstellungs- und/oder Bedienungsumgebung in Abhängigkeit bestimmter Parameter bzw. Vorgaben jeglicher Art und gespeicherte Daten der angeschlossenen Einrichtungen und/oder Anwendungen abrufbar sind und/oder abgerufen werden und/oder übertragbar sind und/oder übertragen werden und die abgerufenen und/oder übertragenen generischen Daten der Darstellungs- und/oder Bedienumgebung mit den abgerufenen und/oder übertragenen Daten der angeschlossenen Einrichtungen und/oder Anwendungen verknüpfbar sind und/oder verknüpft werden. Weiterhin ist die Verarbeitungseinrichtung derart ausgebildet, dass in Abhängigkeit der erfolgten Verknüpfung Anzeigen und/oder Bedienstrukturen auf der Mensch-Maschine-Schnittstelle generierbar sind und/oder generiert werden.

Unter generischen Daten sind dabei solche Daten zu verstehen, die sich nicht auf eine spezielle angeschlossene Einrichtung und/oder Anwendung und deren Funktionen, sondern sich auf die Funktionalität und das Aussehen der Anzeigen, der Anzeige- und Bedienstrukturen beziehen.

Nach einer Ausgestaltung der erfindungsgemäßen Vorrichtung sind die generischen Daten in zwei Gruppen von Daten unterteilt. Einmal sind dies umgebungsspezifische und/oder gerätespezifische und/oder kundenspezifische Daten und zum anderen funktions- und funktionsgruppenabhängige Daten der Anzeigen sowie der Anzeige- und Bedienstruktur. Die Verarbeitungseinrichtung ist dabei derart ausgebildet, dass aufgerufene und/oder übertragene Daten der umgebungs-, geräte-, und kundenspezifischen Daten und aufgerufene und/oder übertragene Daten der funktions- und/oder funktionsgruppenabhängigen Daten in der Verarbeitungseinrichtung zusammenführbar sind und/oder zusammengeführt werden.

Eine Weiterbildung der erfindungsgemäßen Vorrichtung sieht vor, dass die Verarbeitungseinrichtung derart ausgebildet ist, dass Daten der funktions- und/oder funktionsgruppenabhängigen Daten abrufbar sind und/oder abgerufen werden und/oder automatisch übertragbar sind und/oder übertragen werden, Daten der umgebungsspezifischen und/oder gerätespezifischen und/oder kundenspezifischen Daten gemäß der abgerufenen und/oder übertragenen funktions- und funktionsgruppenspezifischen Daten und/oder in Abhängigkeit bestimmter Parameter oder Vorgaben sowie Daten der angeschlossenen Einrichtungen und/oder Anwendungen abrufbar sind und/oder abgerufen werden und/oder übertragbar sind und/oder übertragen werden. Die Verarbeitungseinrichtung ist weiterhin derart ausgebildet, dass die abgerufenen und/oder übertragenen Daten miteinander verknüpfbar sind und/oder verknüpft werden und in Abhängigkeit der Verknüpfung Anzeigen und/oder Bedienstrukturen der Mensch-Maschine-Schnittstelle erzeugbar sind und/oder erzeugt werden.

Weisen die umgebungsspezifischen und/oder gerätespezifischen und/oder kundenspezifischen Daten fahrzeugspezifische Daten und die funktions- und/oder funktionsgruppenspezifischen Daten Daten entsprechend einem Aussehen und/oder mindestens einer Funktion mindestens einer programmgesteuerten Darstellung, insbesondere eines Applets, für jedes von mehreren Fahrzeugen, Fahrzeugtypen und/oder Ausstattungen auf und die Funktionsdaten der angeschlossenen Einrichtungen und/oder Anwendungen entsprechen Funktionen der angeschlossenen Einrichtungen und/oder Anwendungen, wobei mindestens eine Funktion einer programmgesteuerten Darstellung entspricht, ist die Verarbeitungseinrichtung vorzugsweise derart ausgebildet, dass die Daten, die den Aufbau und/oder die Funktion mindestens einer programmgesteuerten Darstellung darstellen, abrufbar sind und/oder abgerufen werden und/oder automatisch übertragbar und/oder übertragen werden und zumindest die fahrzeugspezifischen Parameter oder Daten der umgebungsspezifischen, gerätespezifischen und/oder kundenspezifischen Daten entsprechend der Daten der mindestens einen programmgesteuerten Darstellung und/oder in Abhängigkeit festgelegter Parameter und Vorgaben abrufbar sind und/oder abgerufen werden und/oder übertragbar sind und/oder übertragen werden. Zusätzlich werden die Daten, insbesondere die Funktionsdaten, der angeschlossenen Einrichtungen und/oder Anwendungen entsprechend der mindestens einen programmgesteuerten Darstellung abgerufen bzw. sind abrufbar und/oder werden automatisch übertragen bzw. sind übertragbar. Die Verarbeitungseinrichtung ist in der Ausführungsform weiterhin derart ausgebildet, dass entsprechend der abgerufenen und/oder übertragenen Daten Anzeigen und/oder Anzeigestrukturen und/oder Bedienelemente und/oder Bedienstrukturen auf der Mensch-Maschine-Schnittstelle mit mindestens einer programmgesteuerten Darstellung generierbar sind und/oder generiert werden.

Nach einer Weiterbildung der erfindungsgemäßen Vorrichtung ist zumindest ein Teil der Daten, insbesondere Funktionsdaten der angeschlossenen Einrichtungen und/oder Anwendungen in einer zentralen Einrichtung (Server) eines Datenkommunikationsnetzwerkes, insbesondere des Internets oder Intranets abgespeichert und die Verarbeitungseinrichtung ist derart ausgebildet, dass diese Daten von der Verarbeitungseinrichtung über eine Kommunikationsverbindung abrufbar sind und/oder abgerufen werden und/oder automatisch übertragbar sind und/oder übertragen werden.

Eine andere Weiterbildung sieht vor, dass zumindest ein Teil der generischen Daten der Darstellungs- und Bedienumgebung der Mensch-Maschine-Schnittstelle in einer zentralen Einrichtung eines Datenkommunikationsnetzwerkes, beispielsweise des Internets oder Intranets abgespeichert sind und die Verarbeitungseinrichtung derart ausgebildet ist, dass über eine aufbaubare Kommunikationsverbindung die Daten von der Verarbeitungseinrichtung abrufbar sind und/oder automatisch zu der Verarbeitungseinrichtung übertragbar sind.

Als Kommunikationsverbindung kann zum Abruf der Daten bzw. zur Datenübertragung neben dem Internet auch jede andere Kommunikationsverbindung, beispielsweise ein Point-to-Point-Übertragungsverfahren oder ein Point-to-Multipoint-Verfahren, zur Anwendung kommen.

Eine Weiterbildung der Verarbeitungseinrichtung sieht vor, dass die abgespeicherten Daten der Darstellungs- und/oder Bedienumgebung und/oder die Daten der anzuzeigenden und/oder zu bedienenden Einrichtungen und/oder Anwendungen aktualisierbar sind und/oder aktualisiert werden und die Verarbeitungseinrichtung derart ausgebildet ist, dass die benötigten Daten in definierten Zeitabständen und/oder ereignisabhängig abrufbar sind und/oder abgerufen werden und/oder automatisch übertragbar sind und/oder übertragen werden.

Nach einer Weiterbildung der Erfindung kann die Verarbeitungseinrichtung auch in einer der angeschlossenen Einrichtungen angeordnet sein oder als Teil der Steuereinrichtung der angeschlossenen Einrichtung ausgebildet sein. Es kann jedoch auch vorgesehen, dass einige Verfahrensschritte in einer Verarbeitungseinrichtung und der andere Teil der Verfahrenschritte in einer oder mehreren Steuereinrichtungen der angeschlossenen Einrichtungen abläuft.

Die Erfindung betrifft weiterhin ein Computerprogrammprodukt, das direkt in einen Speicher einer Verarbeitungseinrichtung ladbar ist und Programmabschnitte umfasst, mit denen die Schritte des erfindungsgemäßen Verfahrens ausführbar sind und/oder ausgeführt werden, wenn das Programmprodukt in der Verarbeitungseinrichtung läuft.

Nachfolgend wird die Erfindung anhand von Ausführungsbeispielen näher beschrieben. Die zugehörigen Zeichnungen zeigen:
Fig. 1 schematische Darstellung eines ersten Ausführungsbeispiels einer Vorrichtung zur Erzeugung einer Anzeige- und Bedienumgebung einer Mensch-Maschine-Schnittstelle 10 und
Fig. 2 schematische Darstellung eines zweiten Ausführungsbeispiels einer Vorrichtung zur Erzeugung einer Anzeige- und bedienumgebung einer mensch-Maschine-Schnittstelle 10.

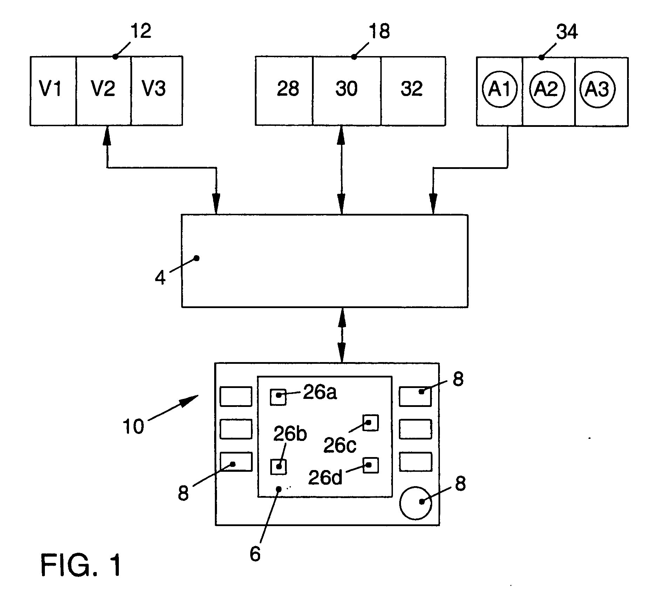

Fig. 1 zeigt eine schematische Darstellung des ersten Ausführungsbeispiels für eine dynamische Mensch-Maschine-Schnittstelle für ein Kraftfahrzeug gemäß vorliegender Erfindung. Die Mensch-Maschine-Schnittstelle 10 umfasst eine Anzeigeeinrichtung 6 zur Darstellung einer Anzeige- und/oder Bedienstruktur für angeschlossene Einrichtungen und/oder Anwendungen, wie beispielsweise Einrichtungen zur Zielführung, Audioeinrichtungen, Klima- und Telefonanlage und verschiedenste Telematik-Einrichtungen. Dabei können die einzelnen Einrichtungen wie auch die Mensch-Maschine-Schnittstelle in ein Datenbussystem eingebunden sein oder direkt miteinander verbunden sein. Des weiteren ist der Mensch-Maschine-Schnittstelle 10 eine Verarbeitungseinrichtung 4 oder eine Steuerungseinrichtung direkt oder indirekt zugeordnet. Gegebenenfalls kann die Verarbeitungseinrichtung auch zusätzlich andere Aufgaben übernehmen. Weiterhin ist eine Speichereinrichtung 2 vorgesehen, welche einzelne Speicher bzw. Speicherabschnitte 12, 18 und 34 umfasst. Der erste Speicherabschnitt 12 ist zum Speichern von umgebungsspezifischen und/oder gerätespezifischen und/oder kundenspezifischen Daten konfiguriert, die im Ausführungsbeispiel zumindest fahrzeugspezifische Parameter darstellen, wie beispielsweise Daten, die einem Hersteller, den Fahrzeugmodellen, den Fahrzeugtypen, der Ausstattungsstufe der Fahrzeuge und/oder einem Ausstattungspaket u.s.w. zugeordnet sind. Fig. 1 zeigt zwar, dass der erste Speicherabschnitt für drei verschiedene Datensätze v1, v2, v3 konfiguriert ist, es ist jedoch darauf hinzuweisen, dass der Speicherabschnitt auch für eine beliebige Anzahl von unterschiedlichen Datensätzen konfiguriert sein kann. Im Ausführungsbeispiel sind die Daten im ersten Speicherabschnitt 12 gemäß eines XSL-Standards (eXtensible Stylesheet Language) oder eines vergleichbaren Standards abgelegt. Sie bestimmen beispielsweise die Farbe oder die Form von Anzeigebildern.

Der zweite Speicherabschnitt 18 ist zum Speichern der funktions- und/oder funktionsgruppenabhängigen Daten 28,30,32 vorgesehen. Im Ausführungsbeispiel sind dies die Daten, die das Aussehen und/oder die Funktion von mindestens einer programmgesteuerten Darstellung (Applet) definieren. Beispielsweise beschreiben diese Daten, wieviel Bedienbutton auf einem Anzeigebild eines Touchscreen-Displays angeordnet sind, welche Funktionen sogenannten Softkeys zugeordnet sind oder ob eine Listenauswahl vorgesehen ist. Auch die Anzahl der Untermenüs kann durch diese Daten bestimmt werden. Im Ausführungsbeispiel sind den Daten 28,30,32 unterschiedliche Aufgaben zugeteilt. Die ersten Daten 28 stellen die generischen Funktionsdaten der Mensch-Maschine-Schnittstelle 10 dar, die zweiten Daten 30 definieren das Aussehen der programmgesteuerten Darstellung (Applet) und die dritten Daten 32 stellen eine Zielverknüpfung dar, wie nachstehend eingehender beschrieben. Der zweite Speicherabschnitt 18 kann zum Speichern der ersten Daten 28, der Daten 30 und/oder der Daten 32 gemäß einem XML-Standard (eXtensible Markup Language) oder einem vergleichbaren Standard konfiguriert werde.

Die. Verarbeitungseinrichtung 4 ist beispielsweise gemäß einem HTML-Standard konfiguriert ist. Die Verarbeitungseinrichtung 4 ruft in Abhängigkeit definierter Vorgaben die Daten 28, 30, 32 aus dem zweiten Speicherabschnitt 18 ab und generiert das generische Aussehen der Mensch-Maschine-Schnittstelle in Verbindung mit abgerufenen Daten, im Ausführungsbeispiel fahrzeugspezifische Daten V1 aus dem ersten Speicherabschnitt 12. Die fahrzeugspezifischen Daten werden dabei in Abhängigkeit des Fahrzeuges, in welchem die Mensch-Maschine-Schnittstelle eingesetzt werden soll bzw. wird, abgerufen. Diese Daten v1 bestimmen beispielsweise die fahrzeugspezifische Gestaltung der Mensch-Maschine-Schnittstelle 10, zum Beispiel die Form und Farbe von Anzeigen oder deren Teilen

Die auf der Anzeigefläche 6 dargestellte programmgesteuerte Darstellung 24 (Applet) umfasst 4 Schaltflächen 26a, 26b, 26c, 26d. Zu beachten ist, dass jede geeignete Anzahl von Schnittstellenelementen vorgesehen werden kann. Jedes Schnittstellenelement, wie beispielsweise die Schaltflächen 26a, 26b, 26c, 26d können einer vorher festgelegten Funktion und/oder einer festgelegten Verknüpfung entsprechen. So entsprechen im Ausführungsbeispiel die Schaltflächen 26a, 26b, 26c, 26d einer Funktionszuweisung der als Softkeys ausgebildeten Bedienelemente 8. Bei einer als Touchscreen ausgebildeten Anzeigeinrichtung können die Schaltflächen selbst als "Bedienelemente" ausgebildet sein. Mit Hilfe der abgerufenen Daten 32 werden die Zielverknüpfungen oder Funktionen der Schnittstellenelemente erzeugt. Der im Ausführungsbeispiel verwendete Browser ist gemäß einem DOM-Standard (Document Objekt Model) konfiguriert.

Die Verarbeitungseinrichtung 4 umfasst weiterhin einen dritten Speicherabschnitt 34, der die Daten der angeschlossenen Einrichtungen und/oder Anwendungen A1, A2, A3 konfiguriert. Diese Daten beinhalten mindestens die Daten einer Funktion der angeschlossenen Einrichtungen und/oder Anwendungen, beispielsweise bei einem Radiogerät die Auswahl von abgespeicherten Sendern. Es wird darauf hingewiesen, dass in Figur 1 zwar nur drei Einrichtungen und/oder Anwendungen A1, A2, A3 dargestellt sind, jedoch jede beliebige Anzahl von Einrichtungen und/oder Anwendungen möglich ist. Des weiteren können die Daten jeglicher Funktion oder jeglicher Parameter der angeschlossenen Einrichtungen und/oder Anwendungen im Speicherabschnitt abgespeichert sein. Es können bereits auch Daten von Einrichtungen und/oder Anwendungen abgespeichert sein, für die die Möglichkeit des Anschlusses an die Mensch-Maschine-Schnittstelle vorgesehen ist, bereits abgespeichert sein. Diese werden dann beispielsweise bei Anschluss der Einrichtung oder Anwendung abgerufen. Die Daten der angeschlossenen Einrichtungen und/oder Anwendungen A1, A2, A3 sind im dritten Speicherabschnitt beispielsweise in Form eines JAVA-Codes abgespeichert. Andere Standards sind denkbar. Über die Verarbeitungseinrichtung 4 werden die abgerufenen Daten 34 der angeschlossenen Einrichtungen und/oder Anwendungen mit den abgerufenen Daten aus dem ersten und zweiten Speicherabschnitt 12 und 18 verknüpft und die entsprechenden Anzeige- und Bedienstrukturen für die Mensch-Maschine-Schnittstelle generiert.

Die Verknüpfung soll anhand der Senderauswahl der gespeicherten Sender eines angeschlossenen Radiogerätes beispielhaft erläutert werden. Die funktions- und funktionsgruppenabhängigen Daten 28, 30, 32 geben die Anzahl und Anordnung der Schaltflächen auf der Anzeigefläche sowie deren Funktionszuordnung (Sprung in eine nächste Menüebene oder Auslösung einer noch zu hinterlegenden Funktion wieder. Beispielsweise können 4 Schaltflächen vorgesehen werden. Die Form und das Aussehen der einzelnen Schaltflächen wird durch die fahrzeugspezifischen Daten aus dem ersten Speicherabschnitt definiert. Über die Daten des Radiogerätes aus dem dritten Speicherabschnitt 34 wird jeder Schaltfläche ein Radiosender zu geordnet, der dann über die entsprechende Schaltfläche ausgewählt werden kann.

Es soll hier darauf hingewiesen werden, dass jeder der einzelne oder mehrere der Speicherabschnitte 12, 18, 34 in eine einzige logische Speichereinrichtung integriert werden kann. Sie können jedoch auch logisch unabhängig von einander ausgeführt sein. Darüber hinaus kann jeder einzelne oder können mehrere der Speicherabschnitte 12,18,34 im Fahrzeug installiert werden, beispielsweise Teil der Mensch-Maschine-Schnittstelle sein, oder entfernt davon angeordnet werden. Es ist dabei auch denkbar, dass die Mensch-Maschine-Schnittstelle fahrzeugbezogen bereits vor dem Einbau in ein Fahrzeug konfiguriert wird, also die Speicherabschnitte 12, 18, 34 nicht direkt einer einzelnen Mensch-Maschine-Schnittstelle zugeordnet sind. Eine Aktualisierung der abgerufenen Daten ist dann beispielsweise über ein Datenkommunikationsnetz oder in einer Servicestation durch Abruf aus einer externen Speichereinrichtung möglich.

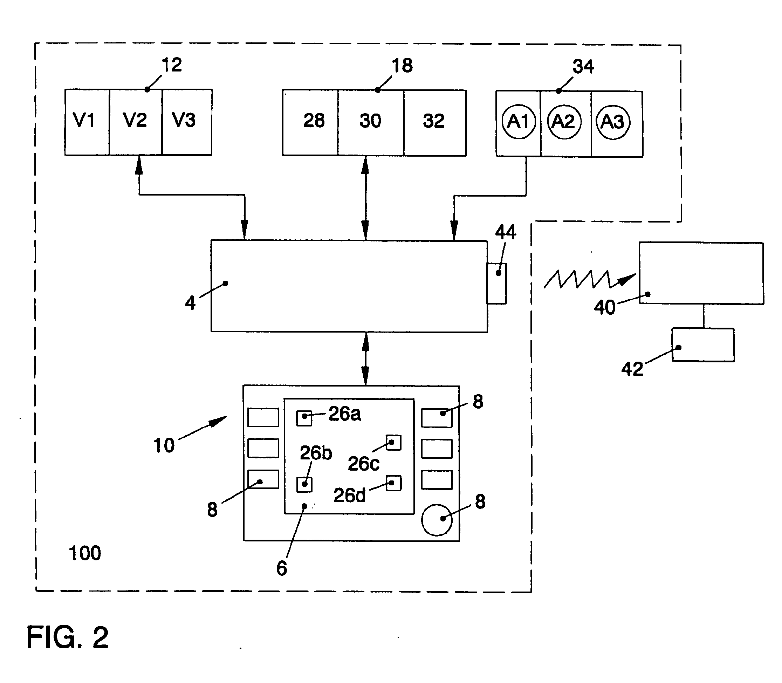

In Fig. 2 ist ein weiteres Ausführungsbeispiel gezeigt. In Fig. 2 sind zu Fig. 1 identische Elemente mit den selben Bezugsziffern bezeichnet. Die in Fig. 2 gezeigte Vorrichtung zur Erzeugung einer Mensch-Maschine-Schnittstelle 10 umfasst ebenfalls die Speicherabschnitte 12, 18 und 34, in denen entsprechend die umgebungsspezifischen und/oder gerätespezifischen und/oder Kundenspezifischen Daten V1, V2, V3, die funktions- und/oder funktionsgruppenabhängigen Daten 28, 30, 32 die dem Aussehen und der Funktion der programmgesteuerten Darstellungen der Mensch-Maschine-Schnittstelle 10 darstellen, und die Funktionsdaten der angeschlossenen und/oder noch anschließbaren Einrichtungen und/oder Anwendungen abgespeichert sind. Diese werden von der Verarbeitungseinrichtung eventuell in Abhängigkeit bestimmter Vorgaben bzw. Parameter abgerufen und zur Erzeugung der entsprechenden Anzeigen und/oder Teilen davon auf der Anzeigeinrichtung 6 der Mensch-Maschine-Schnittstelle miteinander verknüpft. Diese Komponenten sind als im Fahrzeug 100 vorhanden dargestellt. Außerhalb vom Fahrzeug 100 befindet sich eine zentrale Einrichtung 40 mit einer Speichereinrichtung 42, beispielsweise ein Server eines Datenkommunikationsnetzwerkes. Mit der zentralen Einrichtung 40 kann die Verarbeitungseinrichtung 4 über eine ihr zugeordnete Kommunikationseinrichtung 44 und eine mit Hilfe der Kommunikationseinrichtung aufbaubare Kommunikationsstrecke einen Datenaustausch durchführen und in der Speichereinrichtung 42 abgelegte Daten abrufen. Dies kann kontinuierlich erfolgen, wenn die Kommunikationsverbindung aufgebaut ist, aber beispielsweise auch in bestimmten Zeitabständen oder ereignisbezogen. Solche Ereignisse können beispielsweise ein Start des Fahrzeuges, der Anschluss eines neuen Gerätes, ein Servicezeitpunkt oder eine manuelle Anforderung durch eine Bedienperson sein. Selbstverständlich muss jeweils eine Kommunikationsverbindung zwischen der Verarbeitungseinrichtung 4 und der zentralen Einrichtung 40 aufgebaut sein. Es ist hier auch denkbar, die Speichereinrichtung 42 gegebenenfalls über eine Steuereinrichtung in einer Servicestation direkt über eine Datenleitung mit der Verarbeitungseinrichtung 4 zu verbinden.

Die Speichereinrichtung 42 kann sowohl umgebungsspezifische und/oder gerätespezifische und/oder kundenspezifische Daten V1, V2, V3, funktions- und/oder funktionsgruppenabhängige Daten 28,30,32 als auch Daten für angeschlossene und/oder noch anschließbare Einrichtungen und/oder Anwendungen enthalten, mit deren Hilfe die im Fahrzeug in den Speicherabschnitten 12, 18, 34 aktualisiert werden können, wenn beispielsweise eine Einrichtung und/oder Anwendung ausgetauscht oder eine neue Einrichtung angeschlossen oder eine neue Anwendung installiert werden soll. Es ist jedoch auch denkbar, dass beispielsweise ein Teil der Daten einer angeschlossenen Einrichtung oder installierten Anwendung in der Speichereinrichtung 42 abgelegt ist und nach Bedarf oder automatischen Abruf abgerufen werden. Als Beispiel sollen hier Daten von Straßenkarten genannt werden, die für die für Zielführungseinrichtungen oder einzelne Fahrerassistenzsysteme benötigt werden. Diese Daten haben einen großen Speicherbedarf und eine große Änderungsrate, so dass über die Abspeicherung dieser Daten in dem externen Speicher 42 eine Aktualität der Daten für die Fahrzeugeinrichtungen gewährleistet wird.

Auch wenn hier nur zwei Ausführungsbeispiele der vorliegenden Erfindung offengelegt und beschrieben sind, stellen diese Beispiele keine Beschränkung der Erfindung dar. Es sind weitere Realisierungsmöglichkeiten der Erfindung denkbar. Des weiteren ist davon auszugehen, dass an der vorliegenden Erfindung Änderungen vorgenommen werden können, ohne von ihrem Zweck und Umfang abzuweichen. So kann der Speicherabschnitt 34 mit seinen einrichtungsbezogenen Daten A1, A2, A3 beispielsweise der jeweiligen anzuschließenden bzw. angeschlossenen Einrichtung zugeordnet sein, das heißt, die Einrichtung bringt ihren Speicherabschnitt" 34 mit. Zusätzlich kann aber auch ein Speicherabschnitt 34 für mehrere Einrichtungen und/oder Anwendungen existieren, der der Verarbeitungseinrichtung physisch zugeordnet ist.

Der Vorteil der Erfindung liegt insbesondere darin, dass eine Mensch-Maschine-Schnittstelle geschaffen wird, die an die unterschiedlichsten Anwendungsfälle anpassbar ist, die bei Datenänderungen auf einfache Weise aktualisiert werden kann, indem die neuen Daten abgerufen, miteinander verknüpft werden und entsprechend angepasste Anzeige- und Bedienstrukturen geschaffen werden. Zusätzlich schafft die Erfindung die Möglichkeit, neue oder weitere Einrichtungen an die Mensch-Maschine-Schnittstelle 10 anzuschließen.

## Patentansprüche

1. Verfahren zur Erzeugung einer Anzeige- und Bedienumgebung einer Mensch-Maschine-Schnittstelle (10) mit angeschlossenen Einrichtungen und/oder Anwendungen, wobei der Mensch-Maschine-Schnittstelle (10) direkt oder indirekt eine Verarbeitungseinrichtung (4) zugeordnet ist, mit folgenden Schritten:
- Abrufen von gespeicherten generischen Daten (V1,V2,V3, 28,30,32) der Darstellungs- und/oder Bedienumgebung der Mensch-Maschine-Schnittstelle (10) durch die Verarbeitungseinrichtung (4) und/oder Übertragen von gespeicherten generischen Daten (V1,V2,V3, 28,30,32) der Darstellungs- und/oder Bedienumgebung der Mensch-Maschine-Schnittstelle (10) in die Verarbeitungseinrichtung (4) in Abhängigkeit bestimmter Parameter,
**dadurch gekennzeichnet, dass** die generischen Daten der Darstellung- und/oder Bedienumgebung der Mensch-Maschine-Schnittstelle umgebungsspezifische und/oder gerätespezifische und/oder kundenspezifische Daten (V1,V2,V3) und funktions- und/oder funktionsgruppenabhängige Daten (28,30,32) von anschließbaren Einrichtungen oder Anwendungen aufweisen,
- Abrufen von gespeicherten Daten (A1;A2,A3), insbesondere Funktionsdaten, der angeschlossenen Einrichtungen und/oder Anwendungen durch die Verarbeitungseinrichtung (4) und/oder Übertragen von gespeicherten Daten (A1,A2,A3), insbesondere Funktionsdaten, der angeschlossenen Einrichtungen und/oder Anwendungen in die Verarbeitungseinrichtung (4) und
- Verknüpfen der abgerufenen und/oder übertragenen generischen Daten (V1,V2,V3;28,30,32) der Darstellungs- und/oder Bedienumgebung der Mensch-Maschine-Schnittstelle (10) mit den abgerufenen und/oder übertragenen Daten (A1,A2,A3) der angeschlossenen Einrichtungen und/oder Anwendungen in der Verarbeitungseinrichtung (4) und Generieren von Anzeigen und/oder Bedienstrukturen auf der Mensch-Maschine-Schnittstelle(10) in Abhängigkeit der Verknüpfung.

2. Verfahren nach Anspruch 1, **dadurch gekennzeichnet, dass** die umgebungsspezifischen und/oder gerätespezifischen und/oder kundenspezifischen Daten (V1,V2,V3) mit den funktions- und/oder funktionsgrupperiabhängigen Daten (28,30,32) in Abhängigkeit der bestimmten Parameter in der Verarbeitungseinrichtung (4) zusammengeführt werden.

3. Verfahren nach Anspruch 2, **dadurch gekennzeichnet, dass** die umgebungsspezifischen und/oder gerätespezifischen und/oder kundenspezifischen Daten (V1,V2,V3) über das Aussehen, insbesondere Farben und Formen, von Anzeigebildern und deren Teilen aufweisen.

4. Verfahren nach Anspruch 2 oder 3, **dadurch gekennzeichnet, dass** die funktions- und/oder funktionsgruppenabhängigen Daten (28,30,32) Daten über den strukturellen Aufbau von Anzeigebildern, insbesondere über die Anzahl und/oder die Anordnung von Anzeigebildern und deren Teilen sowie deren Verknüpfungen, enthalten.

5. Verfahren nach einem der Ansprüche 2 bis 4 mit folgenden Schritten:
- Abrufen und/oder Übertragen der funktions- und/oder funktionsgruppenabhängigen Daten (28,30,32)
- Abrufen und/oder Übertragen der umgebungsspezifischen und/oder gerätespezifischen und/oder kundenspezifischen Daten (V1,V2,V3) gemäß der abgerufenen funktions- und/oder funktionsgruppenabhängigen Daten (28,30,32) und/oder in Abhängigkeit bestimmter Parameter
- Abrufen und/oder Übertragen der Daten (A1,A2,A3) der angeschlossenen Einrichtungen und/oder Anwendungen
- Verknüpfen der abgerufenen und/oder übertragenen Daten und Generieren von Anzeigen und/oder von Bedienstrukturen auf der Mensch-Maschine-Schnittstelle (10) in Abhängigkeit der Verknüpfung.

6. Verfahren nach einem der Ansprüche 2 bis 5, **dadurch gekennzeichnet, dass** bei dem Einsatz der Mensch-Maschine-Schnittstelle (10) in einem Kraftfahrzeug (100) die umgebungsspezifischen und/odergerätespezfischen und/oder kundenspezifischen Daten (V1,V2,V3) fahrzeugspezifische Parameter aufweisen.

7. Verfahren nach einem der Ansprüche 6, **dadurch gekennzeichnet, dass** die funktions- und/oder funktionsgruppenabhängigen Daten (28,30,32) Daten entsprechend einem Aussehen und/oder mindestens einer Funktion mindestens einer programmgesteuerten Darstellung, insbesondere eines Applets, für jedes von mehreren Fahrzeugen aufweisen.

8. Verfahren nach Anspruch 6 oder 7, **dadurch gekennzeichnet, dass** die Daten (A1,A2,A3) der angeschlossenen und/oder anschließbaren Einrichtungen und/oder Anwendungen Daten von Funktionen der angeschlossen und/oder anschließbaren Einrichtungen und/oder Anwendungen enthalten, wobei mindestens eine Funktion einer programmgesteuerten Darstellung (26) entspricht.

9. Verfahren nach einem der Ansprüche 5 bis 7 mit folgenden Schritten:
- Abrufen und/oder Übertragen zumindest der benötigten Daten (28,30,32), die das Aussehen und/oder die Funktion von mindestens einer programmgesteuerten Darstellung darstellen,
- Abrufen und/oder Übertragen zumindest der fahrzeugspezifischen Parameter der umgebungsspezifischen und/oder gerätespezifischen und/oder kundenspezifischen Daten (V1,V2,V3) entsprechend der Daten (28,30,32) der mindestens einen programmgesteuerten Darstellung und/oder in Abhängigkeit festgelegter Parameter,
- Abrufen und/oder Übertragen zumindest der Daten (A1,A2,A3) der angeschlossenen Einrichtungen und/oder Anwendungen entsprechend der mindestens einen programmgesteuerten Darstellung,
- Generieren von Anzeigen und/oder Bedienstrukturen auf der Mensch-Maschine-Schnittstelle (10) mit mindestens einer programmgesteuerten Darstellung entsprechend der abgerufenen und/oder übertragenen Daten.

10. Verfahren nach einem der Ansprüche 1 bis 9, **dadurch gekennzeichnet, dass** zumindest ein Teil der Daten (A1,A2,A3), insbesondere Funktionsdaten der anzuzeigenden und/oder zu bedienenden Einrichtungen und/oder Anwendungen, in einer zentralen Einrichtung (40) eines Datenkommunikationsnetzwerkes abgespeichert sind und über eine aufbaubare Kommunikationsverbindung von der Verarbeitungseinrichtung (4) abgerufen und/oder zu der Verarbeitungseinrichtung automatisch übertragen werden.

11. Verfahren nach einem der Ansprüche 1 bis 10, **dadurch gekennzeichnet, dass** zumindest ein Teil der generischen Daten (V1,V2,V3, 28,30,32) der Darstellung- und/oder Bedienumgebung der Mensch-Maschine-Schnittstelle (10) in einer zentralen Einrichtung (40) eines Datenkommunikationsnetzwerkes abgespeichert sind und über eine aufbaubare Kommunikationsverbindung von der Verarbeitungseinrichtung (4) abgerufen und/oder zu der Verarbeitungseinrichtung (4) übertragen werden.

12. Verfahren nach einem der Ansprüche 1 bis 11, **dadurch gekennzeichnet, dass** die abgespeicherten Daten (V1,V2,V3,28,30,32) der Darstellungs- und/oder Bedienungsumgebung und/oder die abgespeicherten Daten (A1,A2,A3) der anzuzeigenden und/oder zu bedienenden Einrichtungen und/oder Anwendungen aktualisierbar sind oder aktualisiert werden und die Daten in definierten Zeitabständen und/oder ereignisabhärigig abrufbar sind oder abgerufen und/oder automatisch übertragen werden.

13. Vorrichtung zur Ausführung der Verfahren nach einem vorhergehenden Ansprüche zur Erzeugung einer Anzeige- und Bedienumgebung einer Mensch-Maschine-Schnittstelle (10) entsprechend angeschlossener und/oder anschließbarer Einrichtungen und/oder Anwendungen, wobei die Mensch-Maschine-Schnittstelle (10) zumindest eine Bedieneinrichtung (8) und zumindest eine Ausgabeeinrichtung (6) aufweist und eine Verarbeitungseinrichtung (4) umfasst und/oder mit der Verarbeitungseinrichtung (4) verbunden ist, wobei der Verarbeitungseinrichtung (4) eine oder mehrere Speichereinrichtungen (12,18,34,42) zugeordnet sind, die generische Daten (V1,V2,V3,28,30,32) der Darstellungs- und/oder Bedienungsumgebung der Mensch-Maschine-Schnittstelle (10) aufweisen, **dadurch gekennzeichnet, dass** die generischen Daten, die umgebungsspezifische und/oder gerätespezifische und/oder kundenspezifische Daten (V1,V2,V3) und funktions- und/oder funktionsgruppenabhängige Daten (28,30,32) von anschließbaren Einrichtungen oder Anwendungen aufweisen, und Daten (A1,A2,A3), insbesondere Funktionsdaten der angeschlossenen und/oder anschließbarer Einrichtungen und/oder Anwendungen abgelegt sind und die Verarbeitungseinrichtung (4) derart ausgebildet ist, dass abgespeicherte generische Daten (V1,V2,V3,28,30,32) der Darstellungs- und/oder Bedienungsumgebung der Mensch-Maschine-Schnittstelle (10) in Abhängigkeit bestimmter Parameter und gespeicherte Daten (A1,A2,A3) der angeschlossenen und/oder anschließbaren Einrichtungen und/oder Anwendungen abrufbar sind und/oder abgerufen werden und/oder automatisch übertragbar sind und/oder übertragen werden und die abgerufenen und/oder übertragenen generischen Daten (V1,V2,V3,28,30,32) der Darstellungs- und/oder Bedienumgebung der Mensch-Maschine-Schnittstelle (10) mit den abgerufenen und/oder übertragenen Daten (A1,A2,A3) der angeschlossenen Einrichtungen und/oder Anwendungen verknüpfbar sind und/oder verknüpft werden und in Abhängigkeit der Verknüpfung Anzeigen und/oder Bedienstrukturen auf der Mensch-Maschine-Schnittstelle (10) generierbar sind und/oder generiert werden.

14. Vorrichtung nach Anspruch 13, **dadurch gekennzeichnet, dass** die Verarbeitungseinrichtung (4) derart ausgebildet ist, dass nach dem Aufruf und/oder der Übertragung von Daten der umgebungsspezifischen und/oder der gerätespezifischen und/oder kundenspeziflscfien Daten (V1,V2,V3) und von Daten der funktions- und/oder funktionsgruppenabhängigen Daten (28,30,32) diese Daten in Abhängigkeit bestimmter Parameter in der Verarbeitungseinrichtung (4) zusammenführbar sind und/oder zusammengeführt werden.

15. Vorrichtung nach Anspruch 14, **dadurch gekennzeichnet, dass** die umgebungsspezifischen und/oder gerätespezifischen und/oder kundenspezifischen Daten (V1,v2,V3) Daten über das Aussehen, insbesondere Farben und Formen, von Anzeigebildern und deren Teilen aufweisen.

16. Vorrichtung nach Anspruch 14 oder 15, **dadurch gekennzeichnet, dass** die funktions- und/oder funktionsgruppenabhängigen Daten (28,30,32) Daten über den strukturellen Aufbau von Anzeigebildern, insbesondere über die Anzahl und/oder deren Anordnung von Anzeigebildern und deren Teilen sowie deren Verknüpfungen, enthalten.

17. Vorrichtung nach einem der Ansprüche 14 bis 16, **dadurch gekennzeichnet, dass** die Verarbeitungseinrichtung (4) derart ausgebildet ist, dass Daten der funktions- und/oder funktionsgruppenabhängigen Daten (28,30,32) abrufbar sind und/oder abgerufen werden und/oder automatisch zu der Verarbeitungseinrichtung (4) übertragbar sind und/oder übertragen werden, Daten der umgebungsspezifischen und/oder gerätespezifischen und/oder kundenspezifischen Daten (V1,V2,V3) gemäß der abgerufenen und/oder übertragenen funktions- und funktionsgruppenspezifischen Daten (28,30,32) und/oder in Abhängigkeit bestimmter Parameter sowie Daten (A1,A2,A3) der angeschlossenen Einrichtungen und/oder Anwendungen abrufbar sind und/oder abgerufen werden und/oder übertragbar sind und/oder übertragen werden und die abgerufenen und/oder übertragenen Daten miteinander verknüpfbar sind und/oder verknüpft werden und in Abhängigkeit der Verknüpfung Anzeigen und/oder Bedienstrukturen der Mensch-Maschine-Schnittstelle (10) erzeugbar sind und/oder erzeugt werden.

18. Vorrichtung nach einem der Ansprüche 14 bis 17, **dadurch gekennzeichnet, dass** bei dem Einsatz der Mensch-Maschine-Schnittstelle (10) in einem Kraftfahrzeug die umgebungsspezifischen und/oder gerätespezifischen und/oder kundenspezifischen Daten (V1,V2,V3) fahrzeugspezifische Parameter aufweisen.

19. Vorrichtung nach Anspruch 18, **dadurch gekennzeichnet, dass** die funktions- und/oder funktionsgruppenabhängigen Daten (28,30,32) Daten entsprechend einem Aussehen und/oder mindestens einer Funktion mindestens einer programmgesteuerten Darstellung, insbesondere eines Applets, für jedes von mehreren Fahrzeugen (100) aufweisen.

20. Vorrichtung nach Anspruch 18 oder 19, **dadurch gekennzeichnet, dass** die Daten (A1,A2,A3) der angeschlossenen und/oder anschließbaren Einrichtungen und/oder Anwendungen Daten von Funktionen der angeschlossenen Einrichtungen und/oder Anwendungen enthalten, wobei mindestens eine Funktion einer programmgesteuerten Darstellung entspricht.

21. Vorrichtung nach einem der Ansprüche 18 bis 20, **dadurch gekennzeichnet, dass** die Verarbeitungseinrichtung (4) derart ausgebildet ist, dass die Daten (28,30,32), die das Aussehen und/oder die Funktion mindestens einer programmgesteuerten Darstellung darstellen, abrufbar sind und/oder abgerufen werden und/oder automatisch übertragbar sind und/oder Übertragen werden, zumindest die fahrzeugspezifischen Parameter der umgebungsspezifischen und/oder gerätespezifischen und/oder kuridenspeziflschen Daten (V1,V2,V3) entsprechend der Daten (28,30,32) der mindestens einen programmgesteuerten Darstellung und in Abhängigkeit festgelegter Parameter und Daten (A1,A2,A3) der angeschlossenen Einrichtungen und/oder Anwendungen entsprechend der programmgesteuerten Darstellung abrufbar sind und/oder abgerufen werden und/oder automatisch übertragbar sind und/oder übertragen werden und entsprechend der abgerufenen und/oder übertragenen Daten Anzeigen und/oder Anzeigestrukturen und/oder Bedienstrukturen auf der Mensch-Maschine-Schnittstelle (10) mit mindestens einer programmgesteuerten Darstellung generierbar sind und/oder generiert werden.

22. Vorrichtung nach einem der Ansprüche 13 bis 21, **dadurch gekennzeichnet, dass** zumindest ein Teil der Daten (A1,A2,A3), insbesondere Funktionsdaten der angeschlossenen Einrichtungen und/oder Anwendungen, in einer zentralen Einrichtung (40) eines Datenkommunikationsnetzwerkes abgespeichert sind und über eine aufbaubare Kommunikationsverbindung von der Verarbeitungseinrichtung (4) abrufbar sind und/oder automatisch übertragbar sind.

23. Vorrichtung nach einem der Ansprüche 13 bis 22, **dadurch gekennzeichnet, dass** zumindest ein Teil der generischen Daten (V1,V2,V3,28,30,32) der Darstellungs- und Bedienumgebung der Mensch-Maschine-Schnittstelle (10) in einer zentralen Einrichtung (40) eines Datenkommunikationsnetzwerkes abgespeichert sind und über eine aufbaubare Kommunikationsverbindung von der Verarbeitungseinrichtung (4) abrufbar und/oder automatisch übertragbar sind.

24. Vorrichtung nach einem der Ansprüche 13 bis 23, **dadurch gekennzeichnet, dass** die Verarbeitungseinrichtung (4) derart ausgebildet ist, dass die abgespeicherten generischen Daten (V1,V2,V3,28,30,32) der Darstellungs- und/oder Bedienumgebung und/oder die abgespeicherten Daten (A1,A2,A3) der anzuzeigenden und/oder zu bedienenden Einrichtungen und/oder Anwendungen aktualisierbar sind und/oder aktualisiert werden und die Daten in definierten Zeitabständen und/oder ereignisabhängig abrufbar sind oder abgerufen werden und/oder automatisch übertragbar sind und/oder übertragen werden.

25. Vorrichtung nach einem der Ansprüche 13 bis 24, **dadurch gekennzeichnet, dass** die Steuereinrichtung einer angeschlossenen Einrichtung derart ausgebildet ist, dass die Steuereinrichtung zumindest Tellaufgaben der Verarbeitungseinrichtung (4) durchführen kann und/oder durchführt.

26. Computerprogrammprodukt, das direkt in einen Speicher einer Verarbeitungseinrichtung (4) ladbar ist und Programmabschnitte umfasst, mit denen die Verfahrensschritte gemäß der Ansprüche 1 bis 12 automatisch ausführbar sind und/oder ausgeführt werden, wenn das Programmprodukt in der Verarbeitungseinrichtung (4) läuft.

## Claims

1. Method for producing a display and control environment for a man-machine interface (10) with connected devices and/or applications, a processing device (4) being directly or indirectly assigned to the man-machine interface (10), having the following steps:
- stored generic data (V1,V2,V3,28,30,32) of the display and/or control environment of the man-machine interface (10) is called by the processing device (4) and/or stored generic data (V1,V2,V3,28,30,32) of the display and/or control environment of the man-machine interface (10) is transmitted into the processing device (4) as a function of specific parameters, **characterized in that** the generic data of the display and/or control environment of the man-machine interface contains environment-specific and/or device-specific and/or customer-specific data (V1,V2,V3) and function-dependent and/or function-group-dependent data (28,30,32) of devices or applications which can be connected,
- stored data (A1,A2,A3), in particular function data, of the connected devices and/or applications is called by the processing device (4) and/or stored data (A1,A2,A3), in particular function data, of the connected devices and/or applications is transmitted into the processing device (4), and
- the called and/or transmitted generic data (V1, V2,V3;28,30,32) of the display and/or control environment of the man-machine interface (10) is logically combined with the called and/or transmitted data (A1,A2,A3) of the connected devices and/or applications in the processing device (4) and displays and/or control structures are generated on the man-machine interface (10) as a function of the logic operation.

2. Method according to Claim 1, **characterized in that** the environment-specific and/or device-specific and/or customer-specific data (V1,V2,V3) is combined in the processing device (4) with the function-dependent and/or function-group-dependent data (28,30,32) as a function of the specific parameters.

3. Method according to Claim 2, **characterized in that** the environment-specific and/or device-specific and/or customer-specific data (V1,V2,V3) contains data about the appearance, in particular colours and shapes, of display images and their parts.

4. Method according to Claim 2 or 3, **characterized in that** the function-dependent and/or function-group-dependent data (28,30,32) contains data about the structure of display images, in particular about the number and/or arrangement of display images and their parts as well as their logic operations.

5. Method according to one of Claims 2 to 4, having the following steps:
- the function-dependent and/or function-group-dependent data (28,30,32) is called and/or transmitted,
- the environment-specific and/or device-specific and/or customer-specific data (V1,V2,V3) is called and/or transmitted in accordance with the called function-dependent and/or function-group-dependent data (28,30,32) and/or as a function of specific parameters,
- the data (A1,A2,A3) of the connected devices and/or applications is called and/or transmitted,
- the called and/or transmitted data is logically combined, and displays and/or control structures are generated on the man-machine interface (10) as a function of the logic operation.

6. Method according to one of Claims 2 to 5, **characterized in that** when the man-machine interface (10) is used in a motor vehicle (100) the environment-specific and/or device-specific and/or customer-specific data (V1,V2,V3) has vehicle-specific parameters.

7. Method according to Claim 6, **characterized in that** the function-dependent and/or function-group-dependent data (28,30,32) contains data corresponding to an appearance and/or at least one function of at least one program-controlled display, in particular of an applet, for each of a plurality of vehicles.

8. Method according to Claim 6 or 7, **characterized in that** the data (A1,A2,A3) of the devices and/or applications which are connected and/or can be connected contains data of functions of the devices and/or applications which are connected and/or can be connected, at least one function corresponding to one program-controlled display (26).

9. Method according to one of Claims 5 to 7, having the following steps:
- at least the required data (28,30,32) which represents the appearance and/or the function of at least one program-controlled display is called and/or transmitted,
- at least the vehicle-specific parameters of the environment-specific and/or device-specific and/or customer-specific data (V1,V2,V3) is called and/or transmitted in accordance with the data (28,30,32) of the at least one program-controlled display and/or as a function of defined parameters,
- at least the data (A1,A2,A3) of the connected devices and/or applications is called and/or transmitted in accordance with the at least one program-controlled display,
- displays and/or control structures are generated on the man-machine interface (10) with at least one program-controlled display corresponding to the called and/or transmitted data.

10. Method according to one of Claims 1 to 9, **characterized in that** at least some of the data (A1,A2,A3), in particular function data of the devices and/or applications which are to be displayed and/or controlled, is stored in a central device (40) of a data communications network and is called from the processing device (4) via a communications link which can be set up, and/or transmitted automatically to the processing device.

11. Method according to one of Claims 1 to 10, **characterized in that** at least some of the generic data (V1,V2,V3,28,30,32) of the display and/or control environment of the man-machine interface (10) is stored in a central device (40) of a data communications network and is called from the processing device (4) and/or transmitted to the processing device (4) via a communications link which can be set up.

12. Method according to one of Claims 1 to 11, **characterized in that** the stored data (V1,V2,V3, 28,30,32) of the display and/or control environment and/or the stored data (A1,A2,A3) of the devices and/or applications which are to be displayed and/or controlled can be updated or is updated, and the data can be called or is called and/or transmitted automatically at defined time intervals and/or in an event-dependent fashion.

13. Device for carrying out the method according to one of the preceding claims for producing a display and control environment of a man-machine interface (10) with devices and/or applications which are correspondingly connected and/or can be connected, the man-machine interface (10) having at least one control device (8) and at least one output device (6) and comprising a processing device (4) and/or being connected to the processing device (4), one or more memory devices (12,18,34,42) being assigned to the processing device (4) and containing generic data (V1,V2,V3,28, 30,32) of the display and/or control environment of the man-machine interface (10), **characterized in that** the generic data contains environment-specific and/or device-specific and/or customer-specific data (V1,V2,V3) and function-dependent and/or function-group-dependent data (28,30,32) of devices or applications which can be connected, and data (A1,A2,A3), in particular function data of the devices and/or applications which are connected and/or can be connected is stored, and the processing device (4) is embodied in such a way that stored generic data (V1,V2,V3,28,30,32) of the display and/or control environment of the man-machine interface (10) can be called and/or is called and/or can be transmitted automatically and/or is transmitted automatically as a function of specific parameters and stored data (A1,A2,A3) of the devices and/or applications which are connected and/or can be connected, and the called and/or transmitted generic data (V1,V2,V3,28,30,32) of the display and/or control environment of the man-machine interface (10) can be logically combined and/or is logically combined with the called and/or transmitted data (A1,A2,A3) of the connected devices and/or applications, and displays and/or control structures can be generated and/or are generated on the man-machine interface (10) as a function of the logic combination.

14. Device according to Claim 13, **characterized in that** the processing device (4) is embodied in such a way that after data from the environment-specific and/or device-specific and/or customer-specific data (V1,V-2,V3) and data from the function-dependent and/or function-group-dependent data (28,30,32) has been called and/or transmitted, this data can be combined and/or is combined in the processing device (4) as a function of specific parameters.

15. Device according to Claim 14, **characterized in that** the environment-specific and/or device-specific and/or customer-specific data (V1,V2,V3) contains data about to the appearance, in particular colours and shapes, of display images and their parts.

16. Device according to Claim 14 or 15, **characterized in that** the function-dependent and/or function-group-dependent data (28,30,32) contains data about the structure of display images, in particular about the number and/or arrangement of display images and their parts as well as their logic operations.

17. Device according to one of Claims 14 to 16, **characterized in that** the processing device (4) is embodied in such a way that data of the function-dependent and/or function-group-dependent data (28,30,32) can be called and/or is called and/or can be transmitted and/or is transmitted automatically to the processing device (4), data from the environment-specific and/or device-specific and/or customer-specific data (V1,V2,V3) can be called and/or is called and/or can be transmitted and/or is transmitted in accordance with the called and/or transmitted function-specific and function-group-specific data (28,30,32) and/or as a function of specific parameters and data (A1,A2,A3) of the connected devices and/or applications, and the called and/or transmitted data items can be logically combined and/or are logically combined with one another, and displays and/or control structures of the man-machine interface (10) can be produced and/or are produced as a function of the logic operation.

18. Device according to one of Claims 14 to 17, **characterized in that** when the man-machine interface (10) is used in a motor vehicle the environment-specific and/or device-specific and/or customer-specific data (V1,V2,V3) has vehicle-specific parameters.

19. Device according to Claim 18, **characterized in that** the function-group and/or function-group-dependent data (28,30,32) contains data corresponding to an appearance and/or at least one function of at least one program-controlled display, in particular of an applet, for each of a plurality of vehicles (100).

20. Device according to Claim 18 or 19, **characterized in that** the data (A1,A2,A3) of the devices and/or applications which are connected and/or can be connected contains data of functions of the connected devices and/or applications, at least one function corresponding to one program-controlled display.

21. Device according to one of Claims 18 to 20, **characterized in that** the processing device (4) is embodied in such a way that the data (28,30,32) which represents the appearance and/or the function of at least one program-controlled display can be called and/or is called and/or can be transmitted and/or is transmitted automatically, at least the vehicle-specific parameters of the environment-specific and/or device-specific and/or customer-specific data (V1,V2,V3) can be called and/or is called and/or can be transmitted and/or is transmitted automatically in accordance with the data (28,30,32) of the at least one program-controlled display and as a function of defined parameters and data (A1,A2,A3) of the connected devices and/or applications in accordance with the program-controlled display, and displays and/or display structures and/or control structures can be generated and/or are generated on the man-machine interface (10) with at least one program-controlled display in accordance with the called and/or transmitted data.

22. Device according to one of Claims 13 to 21, **characterized in that** at least some of the data (A1,A2,A3), in particular function data of the connected devices and/or applications, is stored in a central device (40) of a data communications network and can be called and/or can be transmitted automatically from the processing device (4) via a communications link which can be set up.

23. Device according to one of Claims 13 to 22, **characterized in that** at least some of the generic data (V1,V2,V3,28,30,32) of the display and control environment of the man-machine interface (10) is stored in a central device (40) of a data communications network and can be called and/or transmitted automatically from the processing device (4) via a communications link which can be set up.

24. Device according to one of Claims 13 to 23, **characterized in that** the processing device (4) is embodied such that the stored generic data (V1,V2,V3,28,30,32) of the display and/or control environment and/or the stored data (A1,A2,A3) of the devices and/or applications which are to be displayed and/or controlled can be updated and/or is updated, and the data can be called or is called and/or can be transmitted and/or is transmitted automatically at defined time intervals and/or in an event-dependent fashion.

25. Device according to one of Claims 13 to 24, **characterized in that** the control device of a connected device is embodied in such a way that the control device can carry out and/or carries out at least partial functions of the processing device (4).

26. Computer program product which can be loaded directly into a memory of a processing device (4) and comprises program segments with which the method steps according to Claims 1 to 12 can be carried out and/or are carried out automatically when the program product runs in the processing device (4).

## Revendications

1. Procédé pour générer un environnement d'affichage et de commande d'une interface homme/machine (10) auquel sont raccordés des équipements et/ou des applications, l'interface homme/machine (10) étant associée directement ou indirectement à un dispositif de traitement (4), comprenant les étapes suivantes :
- Invocation de données génériques enregistrées (V1, V2, V3, 28, 30, 32) de l'environnement d'affichage et/ou de commande de l'interface homme/machine (10) par le dispositif de traitement (4) et/ou transmission de données génériques enregistrées (V1, V2, V3, 28, 30, 32) de l'environnement d'affichage et/ou de commande de l'interface homme/machine (10) dans le dispositif de traitement (4) en fonction de paramètres précis,
**caractérisé en ce que** les données génériques de l'environnement d'affichage et/ou de commande de l'interface homme/machine présentent des données spécifiques à l'environnement et/ou spécifiques à un appareil et/ou spécifiques à un client (V1, V2, V3) ainsi que des données dépendantes d'une fonction et/ou d'un groupe de fonction (28, 30, 32) des équipements ou des applications pouvant être raccordés,
- Invocation de données enregistrées (A1, A2, A3), notamment de données fonctionnelles des équipements et/ou des applications raccordés par le dispositif de traitement (4) et/ou transmission de données enregistrées (A1, A2, A3), notamment de données fonctionnelles des équipements et/ou des applications raccordés dans le dispositif de traitement (4) et
- Combinaison logique des données génériques (V1, V2, V3, 28, 30, 32) invoquées et/ou transmises de l'environnement d'affichage et/ou de commande de l'interface homme/machine (10) avec les données (A1, A2, A3) invoquées et/ou transmises des équipements et/ou des applications raccordés dans le dispositif de traitement (4) et génération d'indications et/ou de structures de commande sur l'interface homme/machine (10) en fonction de la combinaison logique.

2. Procédé selon la revendication 1, **caractérisé en ce que** les données spécifiques à l'environnement et/ou spécifiques à un appareil et/ou spécifiques à un client (V1, V2, V3) sont regroupées avec les données dépendantes d'une fonction et/ou d'un groupe de fonction (28, 30, 32) en fonction des paramètres précis dans le dispositif de traitement (4).

3. Procédé selon la revendication 2, **caractérisé en ce que** les données spécifiques à l'environnement et/ou spécifiques à un appareil et/ou spécifiques à un client (V1, V2, V3) présentent des données sur l'aspect, notamment les couleurs et les formes des images affichées et de leurs parties.

4. Procédé selon la revendication 2 ou 3, **caractérisé en ce que** les données dépendantes d'une fonction et/ou d'un groupe de fonction (28, 30, 32) contiennent des données sur la construction structurelle des images affichées, notamment sur le nombre et/ou l'arrangement des images affichées et de leurs parties ainsi que leurs combinaisons logiques.

5. Procédé selon l'une des revendications 2 à 4 comprenant les étapes suivantes :
- Invocation et/ou transmission des données dépendantes d'une fonction et/où d'un groupe de fonction (28, 30, 32),
- Invocation et/ou transmission des données spécifiques à l'environnement et/ou spécifiques à un appareil et/ou spécifiques à un client (V1, V2, V3) conformément aux données dépendantes d'une fonction et/ou d'un groupe de fonction (28, 30, 32) et/ou en fonction de paramètres précis,
- Invocation et/ou transmission des données (A1, A2, A3) des équipements et/ou des applications raccordés,
- Combinaison logique des données invoquées et/ou transmises et génération d'indications et/ou de structures' de commande sur l'interface homme/machine (10) en fonction de la combinaison logique.

6. Procédé selon l'une des revendications 2 à 5, **caractérisé en ce que** lorsque l'interface homme/machine (10) est utilisée dans un véhicule (100), les données spécifiques à l'environnement et/ou spécifiques à un appareil et/ou spécifiques à un client (V1, V2, V3) présentent des paramètres spécifiques au véhicule.

7. Procédé selon la revendication 6, **caractérisé en ce que** les données dépendantes d'une fonction et/ou d'un groupe de fonction (28, 30, 32) présentent des données correspondant à un aspect et/ou au moins une fonction d'au moins une représentation commandée par programme, notamment une applet, pour chaque véhicule parmi plusieurs.

8. Procédé selon la revendication 6 ou 7, **caractérisé en ce que** les données (A1, A2, A3) des équipements et/ou des applications raccordés et/ou pouvant être raccordés contiennent des données des fonctions des équipements et/ou des applications raccordés et/ou pouvant être raccordés, au moins une fonction correspondant à une représentation commandée par programme (26).

9. Procédé selon l'une des revendications 5 à 7 comprenant les étapes suivantes :
- Invocation et/ou transmission au moins des données nécessaires (28, 30, 32) qui représentent l'aspect et/ou la fonction d'au moins une représentation commandée par programme,
- Invocation et/ou transmission au moins des paramètres spécifiques au véhicule des données spécifiques à l'environnement et/ou spécifiques à un appareil et/ou spécifiques à un client (V1, V2, V3) conformément aux données (28, 30, 32) de l'au moins une représentation commandée par programme et/ou en fonction des paramètres définis,
- Invocation et/ou transmission au moins des données (A1, A2, A3) des équipements et/ou des applications raccordés conformément à l'au moins une représentation commandée par programme,
- Génération d'indications et/ou de structures de commande sur l'interface homme/machine (10) avec au moins une représentation commandée par programme conformément aux données invoquées et/ou transmises.

10. Procédé selon l'une des revendications 1 à 9, **caractérisé en ce qu'**au moins une partie des données (A1, A2, A3), notamment de données fonctionnelles des équipements et/ou des applications à afficher et/ou à commander sont enregistrées dans un dispositif central (40) d'un réseau de communication de données et sont invoquées par le dispositif de traitement (4) et/ou transmises automatiquement au dispositif de traitement par le biais d'une liaison de communication pouvant être établie.

11. Procédé selon l'une des revendications 1 à 10, **caractérisé en ce qu'**au moins une partie des données génériques (V1, V2, V3, 28, 30, 32) de l'environnement d'affichage et/ou de commande de l'interface homme/machine (10) sont enregistrées dans un dispositif central (40) d'un réseau de communication de données et sont invoquées par le dispositif de traitement (4) et/ou transmises automatiquement au dispositif de traitement (4) par le biais d'une liaison de communication pouvant être établie.

12. Procédé selon l'une des revendications 1 à 11, **caractérisé en ce que** les données enregistrées (V1, V2, V3, 28, 30, 32) de l'environnement d'affichage et/ou de commande et/ou les données enregistrées (A1, A2, A3) des équipements et/ou des applications à afficher et/ou à commander peuvent être mises à jour ou sont mises à jour et les données peuvent être invoquées ou sont invoquées et/ou sont transmises automatiquement à des intervalles de temps définis et/ou en fonction d'événements.

13. Dispositif destiné à mettre en oeuvre le procédé selon l'une des revendications précédentes pour générer un environnement d'affichage et de commande d'une interface homme/machine (10) avec des équipements et/ou des applications raccordés de manière conforme, l'interface homme/mach-ine (10) présentant au moins un dispositif de commande (8) et au moins un dispositif de sortie (6) et comprenant un dispositif de traitement (4) et/ou étant reliée avec le dispositif de traitement (4), un ou plusieurs dispositifs de mémorisation (12, 18, 34, 42) étant associés au dispositif de traitement (4), lesquels présentent des données génériques (V1, V2, V3, 28, 30, 32) de l'environnement d'affichage et/ou de commande de l'interface homme/machine (10), **caractérisé en ce que** les données génériques présentent des données spécifiques à l'environnement et/ou spécifiques à un appareil et/ou spécifiques à un client (V1, V2, V3) ainsi que des données dépendantes d'une fonction et/ou d'un groupe de fonction (28, 30, 32) des équipements ou des applications pouvant être raccordés, et des données (A1, A2, A3), notamment des données fonctionnelles des équipements et/ou des applications raccordés et/ou pouvant être raccordés sont stockées et le dispositif de traitement (4) est configuré de telle sorte que les données génériques (V1, V2, V3, 28, 30, 32) de l'environnement d'affichage et/ou de commande de l'interface homme/machine (10) peuvent être invoquées et/ou sont invoquées et/ou peuvent être transmises automatiquement et/ou sont transmises en fonction de paramètres précis et des données enregistrées (A1, A2, A3) des équipements et/ou des applications raccordés et/ou pouvant être raccordés et les données génériques (V1, V2, V3, 28, 30, 32) invoquées et/ou transmises de l'environnement d'affichage et/ou de commande de l'interface homme/machine (10) peuvent être combinées logiquement et/ou sont combinées logiquement avec les données (A1, A2, A3) invoquées et/ou transmises des équipements et/ou des applications raccordés et des indications et/ou des structures de commande peuvent être générées et/ou sont générées sur l'interface homme/machine (10) en fonction de la combinaison logique.

14. Dispositif selon la revendication 13, **caractérisé en ce que** le dispositif de traitement (4) est configuré de telle sorte qu'après l'invocation et/ou la transmission des données spécifiques à l'environnement et/ou spécifiques à un appareil et/ou spécifiques à un client (V1, V2, V3) ainsi que des données dépendantes d'une fonction et/ou d'un groupe de fonction (28, 30, 32), ces données peuvent être regroupées et/ou sont regroupées en fonction des paramètres précis dans le dispositif de traitement (4).

15. Dispositif selon la revendication 14, **caractérisé en ce que** les données spécifiques à l'environnement et/ou spécifiques à un appareil et/ou spécifiques à un client (V1, V2, V3) présentent des données sur l'aspect, notamment les couleurs et les formes des images affichées et de leurs parties.

16. Dispositif selon la revendication 14 ou 15, **caractérisé en ce que** les données dépendantes d'une fonction et/ou d'un groupe de fonction (28, 30, 32) contiennent des données sur la construction structurelle des images affichées, notamment sur le nombre et/ou l'arrangement des images affichées et de leurs parties ainsi que leurs combinaisons logiques.

17. Dispositif selon l'une des revendications 14 à 16, **caractérisé en ce que** le dispositif de traitement (4) est configuré de telle sorte que les données dépendantes d'une fonction et/ou d'un groupe de fonction (28, 30, 32) peuvent être invoquées et/ou sont invoquées et/ou peuvent être transmises et/ou sont transmises automatiquement au dispositif de traitement (4), des données des données spécifiques à l'environnement et/ou spécifiques à un appareil et/ou spécifiques à un client (V1, V2, V3) ainsi que des données (A1, A2, A3) des équipements et/ou des applications raccordés peuvent être invoquées et/ou sont invoquées et/ou peuvent être transmises et/ou sont transmises conformément aux données invoquées et/ou transmises dépendantes d'une fonction et/ou d'un groupe de fonction (28, 30, 32) et/ou en fonction de paramètres précis et les données invoquées et/ou transmises peuvent être combinées logiquement et/ou sont combinées logiquement entre elles et des indications et/ou des structures de commande sur l'interface homme/machine (10) peuvent être générées et/ou sont générées en fonction de la combinaison logique.

18. Dispositif selon l'une des revendications 14 à 17, **caractérisé en ce que** lorsque l'interface homme/machine (10) est utilisée dans un véhicule, les données spécifiques à l'environnement et/ou spécifiques à un appareil et/ou spécifiques à un client (V1, V2, V3) présentent des paramètres spécifiques au véhicule.

19. Dispositif selon la revendication 18, **caractérisé en ce que** les données dépendantes d'une fonction et/ou d'un groupe de fonction (28, 30, 32) présentent des données correspondant à un aspect et/ou au moins une fonction d'au moins une représentation commandée par programme, notamment une applet, pour chaque véhicule (100) parmi plusieurs.

20. Dispositif selon la revendication 18 ou 19, **caractérisé en ce que** les données (A1, A2, A3) des équipements et/ou des applications raccordés et/ou pouvant être raccordés contiennent des données des fonctions des équipements et/ou des applications raccordés, au moins une fonction correspondant à une représentation commandée par programme (26).

21. Dispositif selon l'une des revendications 18 à 20, **caractérisé en ce que** le dispositif de traitement (4) est configuré de telle sorte que les données (28, 30, 32) qui représentent l'aspect et/ou la fonction d'au moins une représentation commandée par programme peuvent être invoquées et/ou sont invoquées et/ou peuvent être transmises et/ou sont transmises automatiquement, au moins les paramètres spécifiques au véhicule des données spécifiques à l'environnement et/ou spécifiques à un appareil et/ou spécifiques à un client (V1, V2, V3) peuvent être invoqués et/ou sont invoqués et/ou peuvent être transmis et/ou sont transmis automatiquement conformément aux données (28, 30, 32) de l'au moins une représentation commandée par programme et en fonction des paramètres définis et les données (A1, A2, A3) des équipements et/ou des applications raccordés peuvent être invoquées et/ou sont invoquées et/ou peuvent être transmises et/ou sont transmises automatiquement conformément à la représentation commandée par programme et des indications et/ou des structures d'indication et/ou des structures de commande sur l'interface homme/machine (10) peuvent être générées et/ou sont générées avec au moins une représentation commandée par programme conformément aux données invoquées et/ou transmises.

22. Dispositif selon l'une des revendications 13 à 21, **caractérisé en ce qu'**au moins une partie des données (A1, A2, A3), notamment de données fonctionnelles des équipements et/ou des applications raccordés sont enregistrées dans un dispositif central (40) d'un réseau de communication de données et peuvent être invoquées par le dispositif de traitement (4) et/ou peuvent être transmises automatiquement par le biais d'une liaison de communication pouvant être établie.

23. Dispositif selon l'une des revendications 13 à 22, **caractérisé en ce qu'**au moins une partie des données génériques (V1, V2, V3, 28, 30, 32) de l'environnement d'affichage et/ou de commande de l'interface homme/machine (10) sont enregistrées dans un dispositif central (40) d'un réseau de communication de données et peuvent être invoquées par le dispositif de traitement (4) et/ou peuvent être transmises automatiquement par le biais d'une liaison de communication pouvant être établie.

24. Dispositif selon l'une des revendications 13 à 23, **caractérisé en ce que** le dispositif de traitement (4) est configuré de telle sorte que les données génériques enregistrées (V1, V2, V3, 28, 30, 32) de l'environnement d'affichage et/ou de commande et/ou les données enregistrées (A1, A2, A3) des équipements et/ou des applications à afficher et/ou à commander peuvent être mises à jour ou sont mises à jour et les données peuvent être invoquées ou sont invoquées et/ou peuvent être transmises et/ou sont transmises automatiquement à des intervalles de temps définis et/ou en fonction d'événements.

25. Dispositif selon l'une des revendications 13 à 24, **caractérisé en ce que** le dispositif de commande d'un équipement raccordé est configuré de telle sorte que le dispositif de commande peut effectuer et/ou effectue au moins des tâches partielles du dispositif de traitement (4).

26. Programme informatique qui peut être chargé directement dans une mémoire du dispositif de traitement (4) et comprend des sections de programme, avec lequel les étapes du procédé selon les revendications 1 à 12 peuvent être exécutées et/ou sont exécutées automatiquement lorsque le programme est exécuté dans le dispositif de traitement (4).
